# EUROPÄISCHE PATENTSCHRIFT

(11) **EP 2 597 751 B1**
(45) Veröffentlichungstag und Bekanntmachung des Hinweises auf die Patenterteilung: **09.01.2019**
(21) Anmeldenummer: 12192966.5
(22) Anmeldetag: 16.11.2012
(51) Int. Cl.: H02K 1/14, H02K 1/18, H02K 5/02, H02K 3/52, H02K 15/02

(54) **Elektromotor mit einem segmentierten Stator**
Electric motor having a segmented stator
Moteur électrique avec un stator segmenté

(30) Priorität: 22.11.2011 DE 102011086768
(43) Veröffentlichungstag der Anmeldung: 29.05.2013
(73) Patentinhaber: Robert Bosch GmbH, 70442 Stuttgart (DE)
(72) Erfinder: Gutmann, Martin, 79232 March (DE); Ewert, Andreas, 77839 Lichtenau (DE); Pfeil, Andreas, 77815 Buehl (DE); Weidlich, Jochen, 76437 Rastatt (DE); Nommensen, Bjoern, 31848 Bad Muender (DE)

(56) Entgegenhaltungen:
- EP-A1- 1 499 000
- DE-A1-102008 023 923
- DE-A1-102008 033 601

## Beschreibung

### Stand der Technik

Die vorliegende Erfindung betrifft einen Elektromotor mit einem Rotor und einem Stator, der eine Vielzahl von ringförmig um eine Statormittelachse angeordneten Statorsegmenten aufweist. Die Statorsegmente sind jeweils zumindest abschnittsweise mit einer Kunststoffummantelung versehen und an in einer Umfangsrichtung des Stators einander zugewandten Fügeflächen aneinander fixierbar.

Die DE 198 57 954 A1 beschreibt einen derartigen Elektromotor mit einem segmentierten Stator, der mehrere mit Kunststoffummantelungen umspritzte Statorsegmente aufweist. Diese sind ringförmig angeordnet und an in Umfangsrichtung einander zugewandten Fügeflächen über Zahn-Zahnlücken-Verbindungen aneinander befestigt.

Nachteilig an diesem Stand der Technik ist, dass bei einer großen mechanischen Beanspruchung eines derartigen Elektromotors die Zahn-Zahnlücken-Verbindungen zwischen den einzelnen Statorsegmenten sich teilweise oder vollständig lösen können und somit eine einwandfreie Funktionalität des Elektromotors nicht mehr gewährleistet sein kann.

Mit der DE10 2008 023 923 A1 ist ein Stator eines Elektromotors bekannt geworden, der sich aus einzelnen Statorsegmenten zusammensetzt, die mit einer Isolierschicht umgossen sind. Dabei wird ein Haltering axial aufgeschoben und verrastet, um die Statorsegmente als Ringform zusammenzuhalten. Ähnliche Elektromotoren sind auch in der EP 1 499 000 A1 und DE 10 2008 033 601 A1 offenbart.

### Offenbarung der Erfindung

Eine Aufgabe der Erfindung ist es daher, einen neuen Elektromotor mit einem segmentierten Stator bereitzustellen, bei dem eine sichere und stabile Befestigung zugeordneter Statorsegmente in Ringform erreicht werden kann.

Dieses Problem wird gelöst durch einen Elektromotor mit den Merkmalen des Anspruchs 1.

Die Erfindung ermöglicht somit die Bereitstellung eines Elektromotors mit einem segmentierten Stator, bei dem die Statorsegmente sicher und stabil in Ringform angeordnet und aneinander befestigt werden können und Toleranzen, aufgrund geringfügiger Fertigungsunterschiede zwischen den einzelnen Statorsegmenten, ausgeglichen werden können.

Bevorzugt ist das mindestens eine Verbindungselement durch Schweißen, Ultraschallschweißen, Laserdurchstrahlschweißen, Schrumpfen, Kleben, Schrumpfkleben, Einklippsen und/oder Aufpressen mit den Kunststoffummantelungen der Statorsegmente verbunden.

Vorteilhaft wird dadurch eine stabile Verbindung des mindestens einen Verbindungselements mit den Kunststoffummantelungen gewährleistet.

Das mindestens eine Verbindungselement weist vorzugsweise Federstahl, Keramik, Glas, ein Elastomer, einen Kunststoff und/oder ein Biopolymer auf. Vorteilhaft kann das mindestens eine Verbindungselement aus derartigen weit verbreiteten Materialien kostengünstig gefertigt werden.

Gemäß einer Ausführungsform ist das mindestens eine Verbindungselement nach Art eines auf die ringförmig angeordneten Statorsegmente aufdrückbaren Lagerdeckels oder nach Art einer Verschalteplatte ausgebildet, in die die ringartig angeordneten Statorsegmente eindrückbar sind.

Dadurch kann vorteilhaft leicht eine Verbindung zwischen dem Verbindungselement und den ringförmig angeordneten Statorsegmenten hergestellt werden.

Gemäß der Erfindung weisen die Kunststoffummantelungen der Statorsegmente und/oder das mindestens eine Verbindungselement geometrische Ausbildungen nach Art von Abschrägungen, Vorsprüngen, Ausnehmungen und/oder Senken zu einer Vergrößerung einer gegenseitigen Verbindungsfläche und/oder Verbesserung einer Positioniergenauigkeit bei einer Befestigung des mindestens einen Verbindungselements an den Kunststoffummantelungen der Statorsegmente auf.

Dadurch wird die Verbindung zwischen dem Verbindungselement und den Statorsegmenten weiter verbessert.

Die geometrischen Ausbildungen sind bevorzugt zueinander korrespondierend ausgebildet.

Dadurch wird die Verbindung zwischen dem Verbindungselement und den Statorsegmenten zusätzlich mechanisch stabilisiert.

Gemäß einer Ausführungsform weist das mindestens eine Verbindungselement einen elastischen Ring zu einem Eingreifen in eine korrespondierende Ausnehmung der Kunststoffummantelungen der Statorsegmente auf.

Dadurch kann das Verbindungselement sehr genau an einer, durch die Ausnehmung der Kunststoffummantelung bestimmten Position mechanisch stabil mit den Statorsegmenten verbunden werden.

Vorzugsweise weist der elastische Ring mindestens eine umfangsvergrößernde Ausbuchtung zur Verstärkung eines Anpressdrucks nach einer Verbindung mit den ringförmig angeordneten Statorsegmenten auf.

Dadurch wird dauerhaft die mechanische Verbindung zwischen dem mindestens einen Verbindungselement und den Statorsegmenten stabilisiert. Darüber hinaus wird dadurch die radial einwärts wirkende Kraft, welche die Statorsegmente beaufschlägt, erhöht.

Gemäß einer Ausführungsform weisen die Kunststoffummantelungen der Statorsegmente und/oder das mindestens eine ringförmige Verbindungselement mindestens einen Energierichtungsgeber auf.

Somit kann bei einem entsprechenden Schweißvorgang eine präzise Energieabgabe im Bereich des Energierichtungsgebers erreicht werden, die eine definierte und kontrollierte Schmelzeerzeugung in diesem Bereich ermöglicht. Vorteilhaft kann dadurch bei einem Aufschmelzen des mindestens einen Energierichtungsgebers die Verbindungsfläche zwischen den Kunststoffummantelungen und dem Verbindungselement vergrößert werden.

Das eingangs genannte Problem wird auch gelöst durch ein Verfahren zur Herstellung eines Elektromotors nach Anspruch 10.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine schematische Ansicht eines Elektromotors mit einem segmentierten Statorkern gemäß einer Ausführungsform,
Fig. 2 eine Draufsicht auf ein segmentiertes Blechpaket gemäß einer Ausführungsform, mit dem der Statorkern von Fig. 1 realisierbar ist,
Fig. 3 eine perspektivische Ansicht eines einzelnen Statorsegments gemäß einer Ausführungsform,
Fig. 4 eine perspektivische Ansicht eines mit einer Einzelwicklung versehenen Statorsegments, das eine Kunststoffummantelung aufweist,
Fig. 5 eine schematische Längschnittansicht eines Elektromotors mit Verbindungselementen gemäß einer Ausführungsform,
Fig. 6 eine schematische Ansicht von zwei an den Verbindungselementen von Fig. 5 befestigten Statorsegmenten,
Fig. 7a eine schematische Ansicht zur Illustration eines ersten Beispiels geometrischer Ausbildungen mindestens einer Kunststoffummantelung und mindestens eines Verbindungselements von Fig. 6,
Fig. 7b eine schematische Ansicht zur Illustration eines zweiten Beispiels geometrischer Ausbildungen mindestens einer Kunststoffummantelung und mindestens eines Verbindungselements von Fig. 6,
Fig. 7c eine schematische Ansicht zur Illustration eines dritten Beispiels geometrischer Ausbildungen mindestens einer Kunststoffummantelung und mindestens eines Verbindungselements von Fig. 6,
Fig. 7d eine schematische Ansicht zur Illustration eines vierten Beispiels geometrischer Ausbildungen mindestens einer Kunststoffummantelung und mindestens eines Verbindungselements von Fig. 6,
Fig. 8a eine schematische Ansicht zur Visualisierung einer Montage mindestens eines Verbindungselements auf mindestens einer Kunststoffummantelung von Fig. 6,
Fig. 8b eine schematische Ansicht zur Visualisierung einer Montage mindestens eines Verbindungselements auf mindestens einer Kunststoffummantelung von Fig. 6 unter Verwendung eines Energierichtungsgebers,
Fig. 9a eine Schnittansicht eines an einem Verbindungselement von Fig. 6 angeordneten elastischen Rings, und
Fig. 9b verkleinerte Draufsichten auf beispielhafte Ausführungsformen des elastischen Rings von Fig. 9a.

### Beschreibung der Ausführungsbeispiele

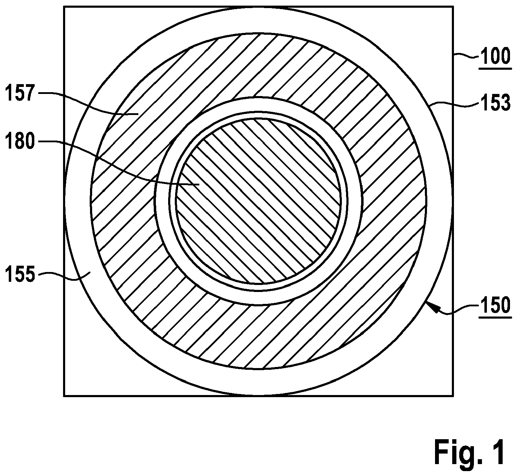

Fig. 1 zeigt einen beispielhaft als Innenläufermotor ausgebildeten Elektromotor 100 mit einem segmentierten Außenstator 150 und einem Innenrotor 180. Der segmentierte Außenstator 150 weist illustrativ einen mit einer Kunststoffummantelung 155 versehenen, segmentierten Statorkern 153 auf, an dem eine Statorwicklung 157 angeordnet ist.

Es wird darauf hingewiesen, dass der Elektromotor 100 in Fig. 1 nur schematisch dargestellt ist, da Aufbau und Funktionalität eines geeigneten Elektromotors hinreichend aus dem Stand der Technik bekannt sind, sodass hier zwecks Knappheit und Einfachheit der Beschreibung auf eine eingehende Beschreibung des Elektromotors 100 verzichtet wird. Des Weiteren wird darauf hingewiesen, dass der Elektromotor 100 lediglich beispielhaft und nicht zur Einschränkung der Erfindung als Innenläufermotor dargestellt ist. Diese kann vielmehr bei allen Motortypen mit segmentierten Statoren Anwendung finden. Darüber hinaus wird darauf hingewiesen, dass auch die Abbildung eines Außenstators lediglich beispielhaften Charakter hat und die Erfindung ebenso z. B. bei ringförmigen Innenstatoren oder Primärteilen von Linearmotoren Anwendung finden kann.

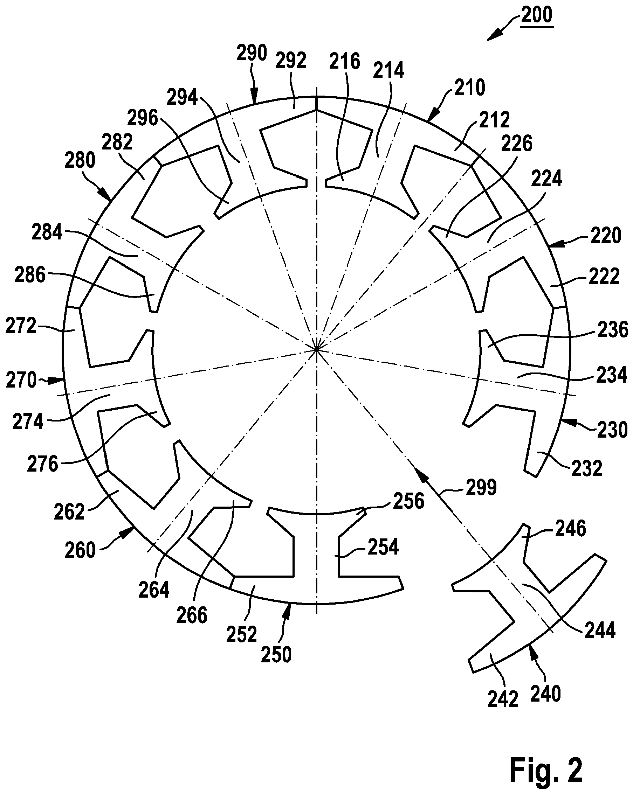

Fig. 2 zeigt eine beispielhafte Anordnung 200 mit einer Vielzahl von im Wesentlichen übereinstimmend ausgebildeten Kernsegmenten 210, 220, 230, 240, 250, 260, 270, 280, 290, die gemäß einer Ausführungsform zur Realisierung des segmentierten Statorkerns 153 von Fig. 1 verwendbar sind. Es wird jedoch darauf hingewiesen, dass die dargestellte Verwendung der neun Kernsegmente 210, 220, 230, 240, 250, 260, 270, 280, 290 lediglich beispielhaften Charakter hat und nicht als Einschränkung der Erfindung zu verstehen ist, die bei einer beliebigen Anzahl von Kernsegmenten Anwendung finden kann. Darüber hinaus können auch andere Statorkerntopologien Anwendung finden, als die in Fig. 2 gezeigte, z. B. können anstelle der separaten Kernsegmente 210, 220, 230, 240, 250, 260, 270, 280, 290 verkettete Kernsegmente verwendet werden usw.

Die Kernsegmente 210, 220, 230, 240, 250, 260, 270, 280, 290 sind illustrativ T-förmig aus einem weichmagnetischen Material ausgebildet und weisen z. B. eine Vielzahl gestapelter Blechlamellen auf, die bevorzugt aneinander befestigt sind, beispielsweise miteinander verschweißt sind, und von gestanzten Elektroblechen gebildet werden. Jedes Kernsegment 210, 220, 230, 240, 250, 260, 270, 280, 290 hat einen Jochabschnitt 212, 222, 232, 242, 252, 262, 272, 282 bzw. 292, der sich jeweils in einen Zahnabschnitt 214, 224, 234, 244, 254, 264, 274, 284 bzw. 294 verjüngt, der sich seinerseits illustrativ in einen verbreiterten Zahnfußabschnitt 216, 226, 236, 246, 256, 266, 276, 286 bzw. 296 aufweitet. Die Kernsegmente 210, 220, 230, 240, 250, 260, 270, 280, 290 sind derart ausgebildet, dass sie ringförmig zusammenfügbar sind, wie mit einem Pfeil 299 angedeutet, wobei die Jochabschnitte 212, 222, 232, 242, 252, 262, 272, 282, 292 von in Umfangsrichtung benachbarten Kernsegmenten 210, 220, 230, 240, 250, 260, 270, 280 bzw. 290 jeweils gegeneinander anliegen.

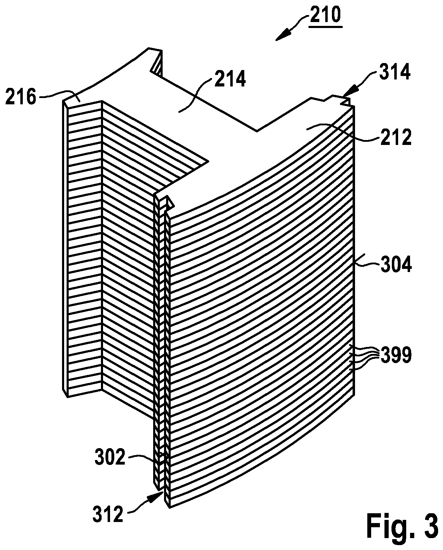

Fig. 3 zeigt das Kernsegment 210 von Fig. 2, das illustrativ eine Vielzahl gestapelter Blechlamellen aufweist, wobei zwecks Einfachheit der Darstellung lediglich vier der Blechlamellen mit dem Bezugszeichen 399 gekennzeichnet sind. Statt gestapelter Blechlamellen kann beispielsweise auch Weicheisen oder ein anderes weichmagnetisches Material für ein Kernsegment vorgesehen sein. Gemäß einer Ausführungsform ist am Jochabschnitt 212 eine erste laterale Fügefläche 302 mit einer in axialer Richtung ausgebildeten Verbindungsnut 312 vorgesehen, und an einer zweiten lateralen Fügefläche 304 ist ein Verbindungssteg 314 in axialer Richtung ausgebildet. Die Verbindungsnut 312 und der Verbindungssteg 314 dienen zur Verbindung mit einem Verbindungssteg bzw. einer Verbindungsnut, die jeweils an benachbarten Kernsegmenten vorgesehen sind.

Anders ausgedrückt haben die Kernsegmente 220, 230, 240, 250, 260, 270, 280, 290 von Fig. 2 wie oben beschrieben einen im Wesentlichen mit dem Aufbau des Kernsegments 210 übereinstimmenden Aufbau. Dementsprechend ist der in Fig. 3 beschriebene Aufbau des Kernsegments 210 als repräsentativ für die Kernsegmente 220, 230, 240, 250, 260, 270, 280, 290 zu verstehen, die somit an ihren Jochabschnitten 222, 232, 242, 252, 262, 272, 282, bzw. 292 ebenfalls jeweils eine Verbindungsnut und einen Verbindungssteg aufweisen, die mit zugeordneten Verbindungsstegen bzw. Verbindungsnuten benachbarter Kernsegmente verbunden sind. In der Anordnung 200 von Fig. 2 ist somit die Verbindungsnut 312 des Kernsegments 210 mit einem zugeordneten Verbindungssteg des Kernsegments 220 verbindbar und der Verbindungssteg 314 ist mit einer zugeordneten Verbindungsnut des Kernsegments 290 verbindbar, usw.

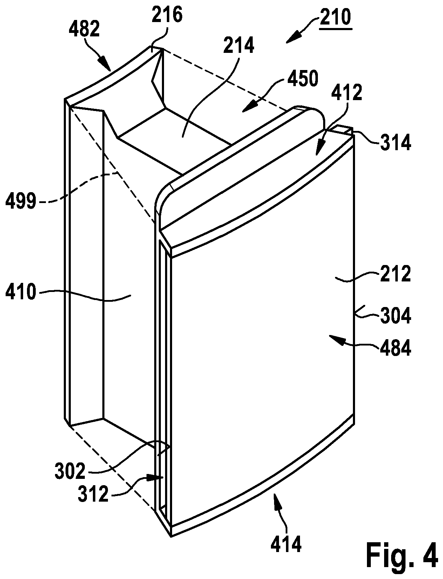

Fig. 4 zeigt das Kernsegment 210 von Fig. 3, das illustrativ mit einer Kunststoffummantelung 410 versehen ist. Zur Verbesserung der Übersichtlichkeit der Abbildung wurde hier auf eine Darstellung der Blechlamellen verzichtet. Gemäß einer Ausführungsform ist die Kunststoffummantelung 410 durch Kunststoffspritzen an dem Kernsegment 210 ausgebildet und umschließt mindestens den Jochabschnitt 212 und den Zahnfußabschnitt 216 zumindest abschnittsweise. Alternativ hierzu kann die Kunststoffummantelung 410 auch aus einem oder mehreren auf das Kernsegment 210 aufsteckbaren Kunststoffteilen ausgebildet werden. Darüber hinaus kann die Kunststoffummantelung 410 zur Fixierung der das Kernsegment 210 ausbildenden, gestapelten Blechlamellen aneinander verwendet werden, sodass auf eine separate Fixierung durch z. B. Verschweißen verzichtet werden kann.

Bevorzugt umschließt die Kunststoffummantelung 410 das Kernsegment 210 vollständig oder zumindest derart, dass lediglich voneinander abgewandte Seitenflächen 482, 484, die am Zahnfußabschnitt 216 bzw. am Jochabschnitt 212 ausgebildet sind, nicht von der Kunststoffummantelung 410 umschlossen sind. Hierbei bildet die Kunststoffummantelung 410 illustrativ eine Wickelnut 450 aus, die zumindest den Zahnabschnitt 214 umschließt und zur Aufnahme einer mit einer durchbrochenen Linie angedeuteten Einzelwicklung 499 ausgebildet ist, die z. B. durch Flyerwickeln oder Spulenwickeln auf die Kunststoffummantelung 410 aufgewickelt wird, wobei die Kunststoffummantelung 410 die Einzelwicklung 499 bevorzugt gegenüber dem Kernsegment 210 elektrisch isoliert. Nachfolgend wird das mit der Kunststoffummantelung 410 und der Einzelwicklung 499 versehene Kernsegment 210 auch als "Statorsegment" bezeichnet.

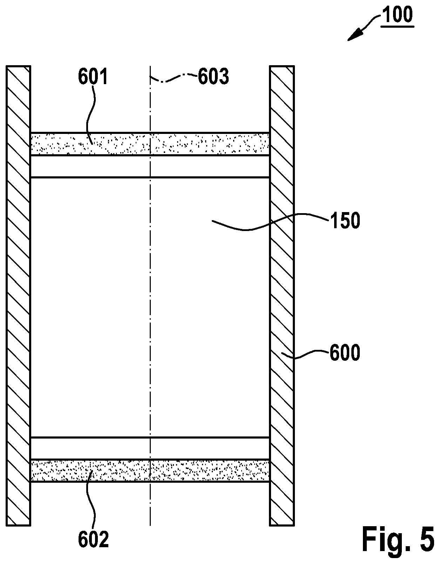

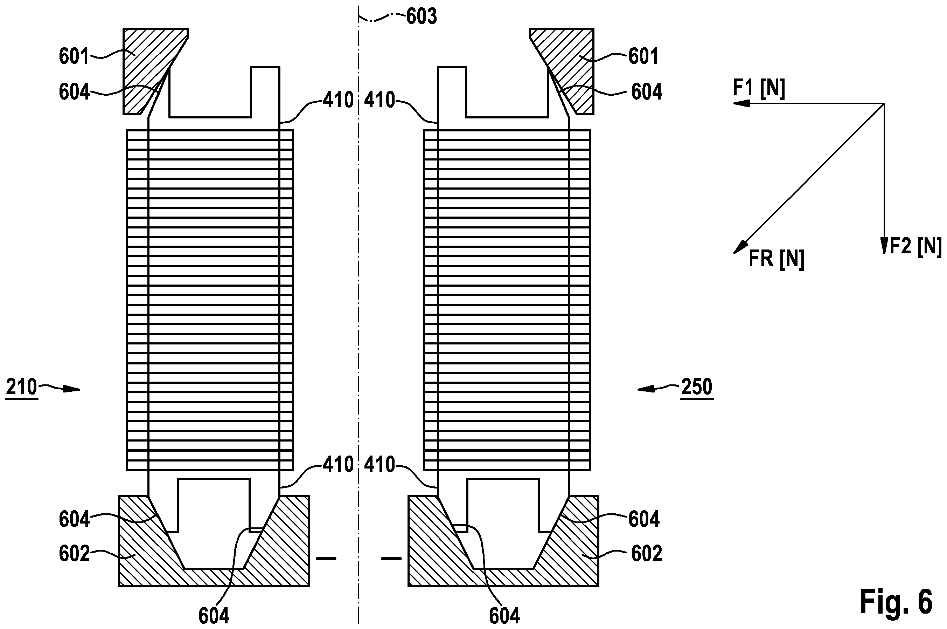

Fig. 5 zeigt den Elektromotor 100 von Fig. 1, der illustrativ ein Gehäuse 600 aufweist, in dem beispielhaft der Stator 150 von Fig. 1 angeordnet ist, der z. B. die um eine Statormittelachse 603 angeordneten Statorsegmente 210, 220, 230, 240, 250, 260, 270, 280, 290 von Fig. 2 aufweisen kann. Der Stator 150 weist mindestens ein und illustrativ zwei Verbindungselemente 601, 602 zur Verbindung dieser Statorsegmente 210, 220, 230, 240, 250, 260, 270, 280, 290 von Fig. 2 auf, wobei das Verbindungselement 601 beispielhaft nach Art eines Lagerdeckels ausgebildet ist und das Verbindungselement 602 beispielhaft nach Art einer Verschalteplatte ausgebildet ist, wie nachfolgend bei Fig. 6 beschrieben.

Fig. 6 zeigt beispielhaft die jeweils mit einer zugeordneten Kunststoffummantelung 410 von Fig. 4 versehenen Statorsegmente 210 und 250 von Fig. 2, die illustrativ spiegelsymmetrisch zu einer die Statormittelachse 603 enthaltenden Spiegelebene angeordnet sind. Die Statorsegmente 210 und 250 sind gemäß der Anordnung 200 von Fig. 2 einander gegenüberliegend angeordnet, als Teile des gemäß Fig. 1 dem Elektromotor 100 zugeordneten Stators 150, mit den ringförmig um die Statormittelachse 603 angeordneten Statorsegmenten 210, 220, 230, 240, 250, 260, 270, 280, 290 von Fig. 2, wie bei Fig. 5 beschrieben.

Gemäß einer Ausführungsform sind die Kunststoffummantelungen 410 der Statorsegmente 210, 250 an einem ersten axialen Ende über den ringförmig ausgebildeten Lagerdeckel 601 und am gegenüberliegenden, zweiten axialen Ende über die ringförmig ausgebildete Verschalteplatte 602 von Fig. 5 miteinander verbunden, wobei die Statorsegmente 210, 250 mit einer radial einwärts in Richtung der Statormittelachse 603 wirkenden Kraft beaufschlagt werden. Der Lagerdeckel 601 ist hierbei auf das erste axiale Ende der Statorsegmente 210, 250 aufgedrückt und das zweite axiale Ende der Statorsegmente 210, 250 ist in die Verschalteplatte 602 eingedrückt.

Dadurch wird eine radial einwärts wirkende Verspannung der Statorsegmente 210, 250 bewirkt. Im rechten Teil der Fig. 6 ist hierzu ein Kräftediagramm dargestellt, das die Erzeugung einer radial zur Statormittetachse 603 wirkenden Kraft FR als resultierend aus einer zur Statormittelachse 603 senkrecht weisenden Kraft F1 und einer dazu senkrechten Kraft F2, durch Verbindung der des Lagerdeckels 601 und der Verschalteplatte 602 mit den Kunststoffummantelungen 410 der Statorsegmente 210, 250, insbesondere durch mechanische Krafteinwirkung mittels Aufdruck in Richtung der Kraft F2, illustriert.

Gemäß einer Ausführungsform weist der Lagerdeckel 601 und/oder die Verschalteplatte 602 ein verformbares Material aus Federstahl, einem Elastomer (z. B. Gummi), einem insbesondere thermoplastischen Kunststoff und/oder einem Biopolymer (z. B. Holz) auf. Vorzugsweise ist der Lagerdeckel 601 und/oder die Verschalteplatte 602 durch Schweißen, Ultraschallschweißen, Laserdurchstrahlschweißen, Schrumpfen, Kleben, Schrumpfkleben, Einklippsen und/oder Aufpressen mit den Kunststoffummantelungen 410 der Statorsegmente 210, 250 verbunden. Hierbei werden Verbindungsbereiche 604 hergestellt, die durch derartige Verbindungsverfahren erzeugt werden können. Nachfolgend wird lediglich beispielhaft und zwecks Knappheit der Beschreibung nur noch auf ein Verschweißen Bezug genommen, was jedoch nicht als Einschränkung der Erfindung zu verstehen ist.

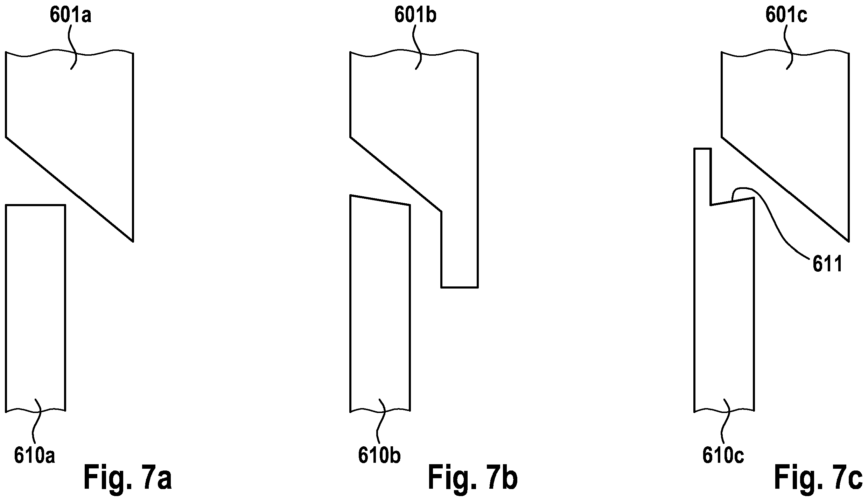

Die Figuren 7a bis 7d zeigen verschiedene Ausführungsformen beispielhafter geometrischer Ausbildungen von abschnittsweise gezeigten axialen Enden von Kunststoffummantelungen sowie von abschnittsweise gezeigten Verbindungselementen, die zur Realisierung der Kunststoffummantelung 410 und des Lagerdeckels 601 und/oder der Verschalteplatte 602 von Fig. 6 Anwendung finden können. Zur Vereinfachung wird nachfolgend jedoch lediglich auf Verbindungselemente zur Realisierung des Lagerdeckels 601 von Fig. 6 Bezug genommen, was jedoch nicht als Einschränkung der Erfindung zu verstehen ist. Derartige geometrische Ausbildungen können nach Art von Abschrägungen, Vorsprüngen, Ausnehmungen und/oder Senken zu einer Vergrößerung einer gegenseitigen Verbindungsfläche und/oder Verbesserung einer Positioniergenauigkeit bei einer Befestigung des Verbindungselements an dem axialen Ende der Kunststoffummantelung vorgesehen sein.

Fig. 7a zeigt ein beispielhaftes axiales Ende 610a der Kunststoffummantelung 410 von Fig. 6 mit einem rechteckigen Querschnitt, sowie ein abgeschrägtes Verbindungselement 601a zur Realisierung des Lagerdeckels 601 von Fig. 6. Bei einem beispielhaften Verschweißen dieses Verbindungselements 601a mit dem axialen Ende 610a wird die dem Verbindungselement 601a zugewandte Kante des axialen Endes 610a abgeschmolzen, bis das Verbindungselement 601a und das axiale Ende 610a zumindest annähernd korrespondierende d. h. etwa parallel zueinander ausgebildete Fügeflächen aufweisen, an den diese über den abgeschmolzenen Kunststoff aneinander verschweißt sind.

Fig. 7b zeigt ein beispielhaftes axiales Ende 610b der Kunststoffummantelung 410 von Fig. 6, das illustrativ eine Abschrägung aufweist, sowie ein beispielhaftes Verbindungselement 601b zur Realisierung des Lagerdeckeis 601 von Fig. 6, das beispielhaft eine teilweise Abschrägung mit einer stegartigen Abschlusskante aufweist, die illustrativ etwa parallel zum axialen Ende 610b verläuft. Bei einem beispielhaften Verschweißen des Verbindungselements 601b mit dem axialen Ende 610b wird die dem Verbindungselement 601b zugewandte Kante des axialen Endes 610b abgeschmolzen, bis das Verbindungselement 601b und das axiale Ende 610b zumindest annähernd korrespondierende d. h. etwa parallel zueinander ausgebildete Fügeflächen aufweisen, an den diese über den abgeschmolzenen Kunststoff aneinander verschweißt sind. Hierbei gelangt auch abgeschmolzener Kunststoff zwischen die stegartige Abschlusskante des Verbindungselements 601b und das axiale Ende 610b, sodass die gesamte Fügefläche noch vergrößert werden kann.

Fig. 7c zeigt ein beispielhaftes axiales Ende 610c der Kunststoffummantelung 410 von Fig. 6, an dem illustrativ eine Senke 611 und eine stegartige Erweiterung ausgebildet sind, sowie ein beispielhaft abgeschrägtes Verbindungselement 601c zur Realisierung des Lagerdeckels 601 von Fig. 6. Bei einem beispielhaften Verschweißen des Verbindungselements 601c mit dem axialen Ende 610c wird die dem Verbindungselement 601c zugewandte Kante des axialen Endes 610c abgeschmolzen, bis das Verbindungselement 601c und das axiale Ende 610c zumindest annähernd korrespondierende d. h. etwa parallel zueinander ausgebildete Fügeflächen aufweisen, an den diese über den abgeschmolzenen Kunststoff aneinander verschweißt sind. Hierbei gelangt auch abgeschmolzener Kunststoff in die Senke 611 und von dort zwischen die stegartige Erweiterung des axialen Endes 610c und das Verbindungselements 601c, sodass die gesamte Fügefläche noch vergrößert werden kann.

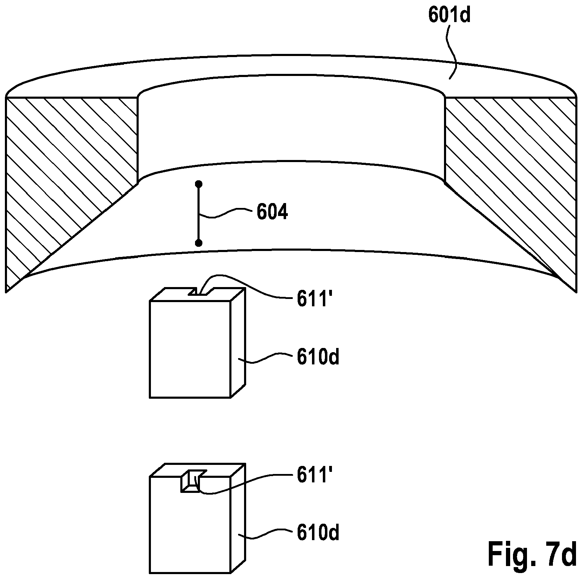

Fig. 7d zeigt einen Ausschnitt 601d des Lagerdeckels 601 von Fig. 6 sowie ein in einer Vorderansicht und einer Rückansicht dargestelltes, beispielhaftes axiales Ende 610d der Kunststoffummantelung 410 von Fig. 6, das illustrativ eine Ausnehmung 611' aufweist. Komplementär dazu weist das Verbindungselement 610d eine beispielhafte Erhebung 604 auf, die z. B. zur Realisierung eines geeigneten Energierichtungsgebers Anwendung finden kann. Durch die Zuordnung der Erhebung 604 zur Ausnehmung 611' wird einerseits die Ausrichtung des Verbindungselements 601d relativ zum axialen Ende 610d erleichtert. Darüber hinaus wird bei einem Verschweißen zur Verbindung des Verbindungselements 601d mit dem axialen Ende 610d das Aufschmelzen im Bereich der als Energierichtungsgeber wirkenden Erhebung 604 beschleunigt.

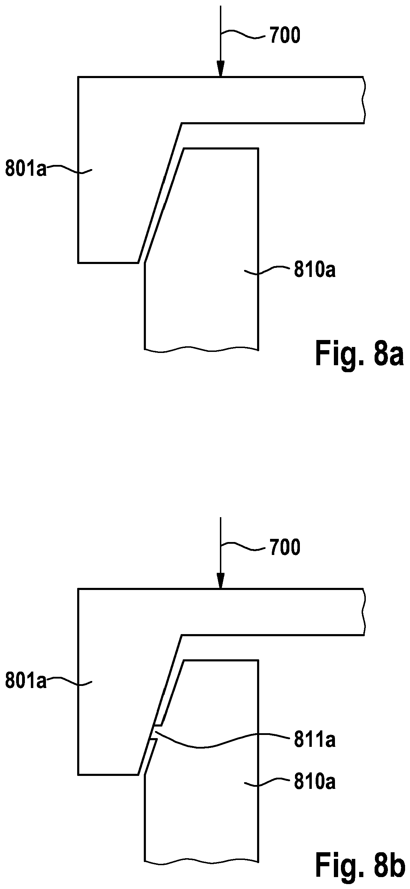

Fig. 8a und Fig. 8b zeigen eine beispielhafte Montage eines z. B. zur Realisierung des Lagerdeckels 601 von Fig. 6 verwendbaren Verbindungselements 801a gemäß einer weiteren beispielhaften Ausführungsform auf ein beispielhaftes axiales Ende 810a der Kunststoffummantelung 410 von Fig. 6 gemäß einer weiteren beispielhaften Ausführungsform. Das Verbindungselement 801a und das axiale Ende 810a weisen beispielhaft einander zugewandte und zumindest annähernd parallel zueinander liegende Abschrägungen auf. Darüber hinaus ist das axiale Ende 810a in Fig. 8b illustrativ mit einem Energierichtungsgeber 611a versehen. Dieser Energierichtungsgeber 611a ist vorzugsweise umlaufend an den Kunststoffummantelungen 410 aller Statorsegmente 210, 220, 230, 240, 250, 260, 270, 280, 290 von Fig. 2 ausgebildet.

Bei der Montage wird das Verbindungselement 801a mit einer in Richtung des Pfeils 700 wirkenden Kraft auf das axiale Ende 810a aufgedrückt. Bei einem weiteren Verbindungsschritt werden das Verbindungselement 801a und das axiale Ende 810a miteinander verschweißt, wie oben bei Fig. 7a bis 7d beispielhaft beschrieben. Es wird jedoch darauf hingewiesen, dass die Beschreibung der Verwendung des Energierichtungsgebers 811a lediglich beispielhaften Charakter hat und nicht als Einschränkung der Erfindung zu verstehen ist, die ebenfalls ohne die Verwendung des Energierichtungsgebers 811a ausführbar ist. Beispielsweise kann beim Verschweißen jeweils ein geeignetes, aufschmelzendes Zusatzmaterial zur Schmelzeerzeugung Anwendung finden. Allerdings ist die Verwendung der Energierichtungsgebers 811a vorteilhaft, um eine verbesserte und vor allem kontrollierte Schmelzeerzeugung bei der Verschweißung zu erreichen.

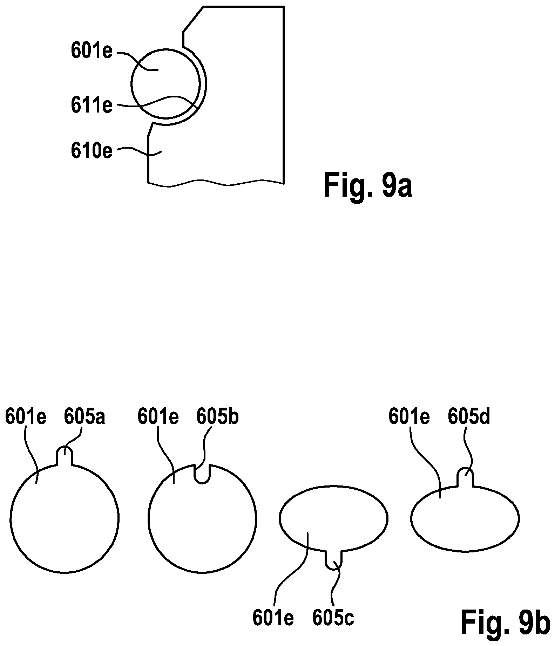

Fig. 9a illustriert eine weitere Ausführungsform mit einem beispielhaft ringförmig ausgebildeten Verbindungselement 601e. Dieses ist beispielhaft dazu ausgebildet, in eine an einem beispielhaften axialen Ende 610e der Kunststoffummantelung 410 von Fig. 6 vorgesehene Ausnehmung 611e, z. B. nach Aufdrücken des Verbindungselements 601e auf die ringförmig angeordneten Statorsegmente 210, 220, 230, 240, 250, 260, 270, 280, 290 von Fig. 2, einzugreifen. Hierbei kann das ringförmige Verbindungselement 601e z. B. nach Art eines elastischen Rings ausgebildet sein, beispielsweise als ein unter Druck fügbarer Federring aus Metall oder einem Elastomer wie Gummi oder einem anderen Biopolymer oder einem Kunststoff, z. B. zum Kleben oder Einklippsen in die Ausnehmung 611e. Alternativ hierzu kann das Verbindungselement 601e auch nach Art eines starren bzw. steifen Rings aus einem starren Biopolymer wie Holz oder Keramik, Glas oder einem Faserverbundwerkstoff zum Kleben oder Einklippsen in die Ausnehmung 611e ausgebildet sein.

Fig. 9b zeigt Beispiele geometrisch verschiedener Ausbildungen des als elastischer Ring ausgebildeten Verbindungselements 601e von Fig. 9a mit unter Einwirkung eines Anpressdrucks umfangvergrößernden Erweiterungen bzw. Ausbuchtungen 605a, 605b, 605c und 605d, mit denen eine Verstärkung des Anpressdrucks z. B. nach einer Verbindung mit den Statorsegmenten 210, 220, 230, 240, 250, 260, 270, 280, 290 von Fig. 2 bewirkt wird. Die Ausbuchtung 605a ist illustrativ radial einwärts und die Ausbuchtung 605b radial auswärts am elastischen Ring 601e ausgebildet. Die Ausbuchtungen 605c und 605d erstrecken sich vom elastischen Ring 601e ausgehend in entgegengesetzte axiale Richtungen von dessen Drehachse.

Dadurch kann ein Toleranzausgleich für Fertigungsunterschiede zwischen den einzelnen Statorsegmenten 210, 220, 230, 240, 250, 260, 270, 280, 290 von Fig. 2, insbesondere ein Höhenausgleich, bewirkt werden. Derartige Fertigungsunterschiede können beispielsweise auf unterschiedlich vielen gestapelten Blechlamellen mit einer Dicke von typischerweise jeweils zwischen 0.1 mm und 0.8 mm beruhen.

Darüber hinaus wird darauf hingewiesen, dass zur Verbesserung der Festigkeit zwischen den Statorsegmenten 210, 220, 230, 240, 250, 260, 270, 280, 290 von Fig. 1 im Anschluss an die vorangehend beschriebenen Montageschritte an dem Lagerdeckel 601 und/oder der Verschalteplatte 602 von Fig. 6 ein weiterer Fixiervorgang erfolgen kann, beispielsweise ein Klebe-, Schrumpf-, Schrumpfklebe- oder Einpressvorgang. Diese Verfahren sind dem Fachmann geläufig, sodass hier zwecks Knappheit der Beschreibung auf eine eingehende Beschreibung verzichtet wird.

## Patentansprüche

1. Elektromotor (100) mit einem Rotor (180) und einem Stator (150), der eine Vielzahl von ringförmig um eine Statormittelachse (603) angeordneten Statorsegmenten (210, 220, 230, 240, 250, 260, 270, 280, 290) aufweist, die jeweils zumindest abschnittsweise mit einer Kunststoffummantelung (410) versehen sind und an in einer Umfangsrichtung des Stators (150) einander zugewandten Fügeflächen (302, 304) aneinander fixierbar sind, **wobei** die Kunststoffummantelungen (410) der Statorsegmente (210, 220, 230, 240, 250, 260, 270, 280, 290) über mindestens ein ringförmiges Verbindungselement (601, 602, 601a, 601b, 601c, 601d, 601e) miteinander verbunden sind, das die Statorsegmente (210, 220, 230, 240, 250, 260, 270, 280, 290) mit einer radial einwärts in Richtung der Statormittelachse (603) wirkenden Kraft beaufschlagt, um eine radial einwärts wirkende Verspannung der Statorsegmente (210, 220, 230, 240, 250, 260, 270, 280, 290) zu bewirken,
**dadurch gekennzeichnet, dass die Kunststoffummantelungen (410) der Statorsegmente (210, 220, 230, 240, 250, 260, 270, 280, 290) und/oder das mindestens eine Verbindungselement (601, 602, 601a, 601b, 601c, 601d, 601e) als geometrische Ausbildungen (610a, 610b, 610c, 610d, 610e, 810a) Abschrägungen,** Vorsprünge, **Ausnehmungen und/oder**
**Senken zu einer Vergrößerung einer gegenseitigen Verbindungsfläche des mindestens einen Verbindungselements (601, 602, 601a, 601b, 601c, 601d, 601e) an den Kunststoffummantelungen (410) der Statorsegmente (210, 220, 230, 240, 250, 260, 270, 280, 290) aufweisen, wobei die dem Verbindungselement (601a) zugewandte Kante des axialen Endes (610a)** der Kunststoffummantelungen (410) abschmelzbar ist, **bis das Verbindungselement (601a) und das axiale Ende (610a) zumindest annähernd parallel zueinander ausgebildete Verbindungsflächen aufweisen, an denen diese über den abgeschmolzenen Kunststoff aneinander verschweißt sind.**

2. Elektromotor nach Anspruch 1, **dadurch gekennzeichnet, dass** das mindestens eine Verbindungselement (601, 602, 601a, 601b, 601c, 601d, 601e) durch **Ultraschallschweißen oder Laserdurchstrahlschweißen** mit den Kunststoffummantelungen (410) der Statorsegmente (210, 220, 230, 240, 250, 260, 270, 280, 290) verbunden ist.

3. Elektromotor nach Anspruch 1 oder 2, **dadurch gekennzeichnet, dass** das mindestens eine Verbindungselement (601, 602, 601a, 601b, 601c, 601d, 601e) Federstahl, Keramik, Glas, ein Elastomer, einen Kunststoff und/oder ein Biopolymer aufweist.

4. Elektromotor nach einem der vorhergehenden Ansprüche, **dadurch gekennzeichnet, dass** das mindestens eine Verbindungselement (601, 602, 601a, 601b, 601c, 601d, 601e) nach Art eines auf die ringförmig angeordneten Statorsegmente (210, 220, 230, 240, 250, 260, 270, 280, 290) aufdrückbaren Lagerdeckels (601) oder nach Art einer Verschalteplatte (602) ausgebildet ist, in die die ringartig angeordneten Statorsegmente (210, 220, 230, 240, 250, 260, 270, 280, 290) eindrückbar sind.

5. Elektromotor nach **Anspruch** 1, **dadurch gekennzeichnet, dass** die geometrischen Ausbildungen (610a, 610b, 610c, 610d, 610e, 810a) zueinander korrespondierend ausgebildet sind.

6. Elektromotor nach einem der vorhergehenden Ansprüche, **dadurch gekennzeichnet, dass** das mindestens eine Verbindungselement (601, 602, 601a, 601b, 601c, 601d, 601e) einen elastischen Ring (601e) zu einem Eingreifen in eine korrespondierende Ausnehmung (611e) der Kunststoffummantelungen (410) der Statorsegmente (210, 220, 230, 240, 250, 260, 270, 280, 290) aufweist.

7. Elektromotor nach **Anspruch 6, dadurch gekennzeichnet, dass** der elastische Ring (601e) mindestens eine umfangsvergrößernde Ausbuchtung (605a, 605b, 605c, 605d) zur Verstärkung eines Anpressdrucks nach einer Verbindung mit den ringförmig angeordneten Statorsegmenten (210, 220, 230, 240, 250, 260, 270, 280, 290) aufweist.

8. Elektromotor nach einem der vorhergehenden Ansprüche, **dadurch gekennzeichnet, dass** die Kunststoffummantelungen (410) der Statorsegmente (210, 220, 230, 240, 250, 260, 270, 280, 290) und/oder das mindestens eine ringförmige Verbindungselement (601, 602, 601a, 601b, 601c, 601d, 601e) mindestens einen Energierichtungsgeber (604) aufweisen, wobei **bei dem entsprechenden Schweißvorgang eine präzise Energieabgabe im Bereich des Energierichtungsgebers (604) erreicht wird, die eine definierte und kontrollierte Schmelzeerzeugung in diesem Bereich ermöglicht.**

9. **Elektromotor nach einem der vorhergehenden Ansprüche, dadurch gekennzeichnet, dass bei einem Aufschmelzen des mindestens einen Energierichtungsgebers (604) die Verbindungsfläche zwischen den Kunststoffummantelungen (410) und dem Verbindungselement (601, 602, 601a, 601b, 601c, 601d, 601e) vergrößert werden.**

10. Verfahren zur Herstellung eines Elektromotors (100), der einen Rotor (180) und einen Stator (150) aufweist, wobei der Stator (150) eine Vielzahl von ringförmig um eine Statormittelachse (603) angeordneten Statorsegmenten (210, 220, 230, 240, 250, 260, 270, 280, 290) aufweist, die jeweils zumindest abschnittsweise mit einer Kunststoffummantelung (410) versehen sind und an in einer Umfangsrichtung des Stators (150) einander zugewandten Fügeflächen (302, 304) aneinander fixierbar sind, wobei die Kunststoffummantelungen (410) der Statorsegmente (210, 220, 230, 240, 250, 260, 270, 280, 290) über mindestens ein ringförmiges Verbindungselement (601, 602, 601a, 601b, 601c, 601d, 601e) miteinander verbunden werden, das die Statorsegmente (210, 220, 230, 240, 250, 260, 270, 280, 290) mit einer radial einwärts in Richtung der Statormittelachse (603) wirkenden Kraft beaufschlagt, um eine radial einwärts wirkende Verspannung der Statorsegmente (210, 220, 230, 240, 250, 260, 270, 280, 290) zu bewirken, **dadurch gekennzeichnet, dass** die Kunststoffummantelungen (410) der Statorsegmente (210, 220, 230, 240, 250, 260, 270, 280, 290) und/oder das mindestens eine Verbindungselement (601, 602, 601a, 601b, 601c, 601d, 601e) als geometrische Ausbildungen (610a, 610b, 610c, 610d, 610e, 810a) Abschrägungen, Vorsprünge, Ausnehmungen und/oder Senken zu einer Vergrößerung einer gegenseitigen Verbindungsfläche des mindestens einen Verbindungselements (601, 602, 601a, 601b, 601c, 601d, 601e) an den Kunststoffummantelungen (410) der Statorsegmente (210, 220, 230, 240, 250, 260, 270, 280, 290) aufweisen, wobei beim Verschweißen des Verbindungselements (601a) mit einem axialen Ende (610a) der Kunststoffummantelungen (410) die dem Verbindungselement (601a) zugewandte Kante des axialen Endes (610a) abgeschmolzen wird, bis das Verbindungselement (601a) und das axiale Ende (610a) zumindest annähernd parallel zueinander ausgebildete Verbindungsflächen aufweisen, an denen diese über den abgeschmolzenen Kunststoff aneinander verschweißt sind.

## Claims

1. Electric motor (100) comprising a rotor (180) and a stator (150) which has a large number of stator segments (210, 220, 230, 240, 250, 260, 270, 280, 290) which are arranged in an annular manner around a stator centre axis (603) and are each provided, at least in sections, with a plastic sheathing (410) and can be fixed to one another at joining faces (302, 304) which face one another in the circumferential direction of the stator (150), wherein the plastic sheathings (410) of the stator segments (210, 220, 230, 240, 250, 260, 270, 280, 290) are connected to one another by means of at least one annular connecting element (601, 602, 601a, 601b, 601c, 601d, 601e) which applies a force, which acts radially inwardly in the direction of the stator centre axis (603), to the stator segments (210, 220, 230, 240, 250, 260, 270, 280, 290) in order to brace the stator segments (210, 220, 230, 240, 250, 260, 270, 280, 290) in a radially inwardly acting manner,
**characterized in that** the plastic sheathings (410) of the stator segments (210, 220, 230, 240, 250, 260, 270, 280, 290) and/or the at least one connecting element (601, 602, 601a, 601b, 601c, 601d, 601e) have, as geometric formations (610a, 610b, 610c, 610d, 610e, 810a), bevels, projections, recesses and/or hollows on the plastic sheathings (410) of the stator segments (210, 220, 230, 240, 250, 260, 270, 280, 290) for increasing the size of a mutual connecting area of the at least one connecting element (601, 602, 601a, 601b, 601c, 601d, 601e), wherein that edge of the axial end (610a) of the plastic sheathings (410) which faces the connecting element (601a) can be melted until the connecting element (601a) and the axial end (610a) have connecting areas which are formed at least approximately parallel in relation to one another and at which the said connecting element and axial end are welded to one another by means of the melted plastic.

2. Electric motor according to Claim 1, **characterized in that** the at least one connecting element (601, 602, 601a, 601b, 601c, 601d, 601e) is connected to the plastic sheathings (410) of the stator segments (210, 220, 230, 240, 250, 260, 270, 280, 290) by ultrasonic welding or laser penetration welding.

3. Electric motor according to Claim 1 or 2, **characterized in that** the at least one connecting element (601, 602, 601a, 601b, 601c, 601d, 601e) comprises spring steel, ceramic, glass, an elastomer, a plastic and/or a biopolymer.

4. Electric motor according to one of the preceding claims, **characterized in that** the at least one connecting element (601, 602, 601a, 601b, 601c, 601d, 601e) is designed in the form of a bearing cover (601) which can be pushed onto the stator segments (210, 220, 230, 240, 250, 260, 270, 280, 290) which are arranged in an annular manner or in the form of an interconnect plate (602) into which the stator segments (210, 220, 230, 240, 250, 260, 270, 280, 290) which are arranged in an annular manner can be pushed.

5. Electric motor according to Claim 1, **characterized in that** the geometric formations (610a, 610b, 610c, 610d, 610e, 810a) are designed such that they correspond to one another.

6. Electric motor according to one of the preceding claims, **characterized in that** the at least one connecting element (601, 602, 601a, 601b, 601c, 601d, 601e) has an elastic ring (601e) for engaging into a corresponding recess (611e) of the plastic sheathings (410) of the stator segments (210, 220, 230, 240, 250, 260, 270, 280, 290) .

7. Electric motor according to Claim 6, **characterized in that** the elastic ring (601e) has at least one circumference-increasing convex portion (605a, 605b, 605c, 605d) for boosting a contact pressure after connection to the stator segments (210, 220, 230, 240, 250, 260, 270, 280, 290) which are arranged in an annular manner.

8. Electric motor according to one of the preceding claims, **characterized in that** the plastic sheathings (410) of the stator segments (210, 220, 230, 240, 250, 260, 270, 280, 290) and/or the at least one annular connecting element (601, 602, 601a, 601b, 601c, 601d, 601e) have/has at least one energy direction transmitter (604), wherein, during the corresponding welding process, a precise emission of energy in the region of the energy direction transmitter (604) is achieved, which enables defined and controlled production of melt in this region.

9. Electric motor according to one of the preceding claims, **characterized in that**, during melting of the at least one energy direction transmitter (604), the connecting area between the plastic sheathings (410) and the connecting element (601, 602, 601a, 601b, 601c, 601d, 601e) is increased in size.

10. Method for producing an electric motor (100) which has a rotor (180) and a stator (150), wherein the stator (150) has a large number of stator segments (210, 220, 230, 240, 250, 260, 270, 280, 290) which are arranged in an annular manner around a stator centre axis (603) and are each provided, at least in sections, with a plastic sheathing (410) and can be fixed to one another at joining faces (302, 304) which face one another in the circumferential direction of the stator (150), wherein the plastic sheathings (410) of the stator segments (210, 220, 230, 240, 250, 260, 270, 280, 290) are connected to one another by means of at least one annular connecting element (601, 602, 601a, 601b, 601c, 601d, 601e) which applies a force, which acts radially inwardly in the direction of the stator centre axis (603), to the stator segments (210, 220, 230, 240, 250, 260, 270, 280, 290) in order to brace the stator segments (210, 220, 230, 240, 250, 260, 270, 280, 290) in a radially inwardly acting manner, **characterized in that** the plastic sheathings (410) of the stator segments (210, 220, 230, 240, 250, 260, 270, 280, 290) and/or the at least one connecting element (601, 602, 601a, 601b, 601c, 601d, 601e) have, as geometric formations (610a, 610b, 610c, 610d, 610e, 810a), bevels, projections, recesses and/or hollows on the plastic sheathings (410) of the stator segments (210, 220, 230, 240, 250, 260, 270, 280, 290) for increasing the size of a mutual connecting area of the at least one connecting element (601, 602, 601a, 601b, 601c, 601d, 601e), wherein, when the connecting element (601a) is welded to an axial end (610a) of the plastic sheathings (410), that edge of the axial end (610a) which faces the connecting element (601a) is melted until the connecting element (601a) and the axial end (610a) have connecting areas which are formed at least approximately parallel in relation to one another and at which the said connecting element and axial end are welded to one another by means of the melted plastic.

## Revendications

1. Moteur électrique (100), doté d'un rotor (180) et d'un stator (150), qui comporte une pluralité de segments de stator (210, 220, 230, 240, 250, 260, 270, 280, 290) placés sous forme annulaire autour d'un axe médian de stator (603), qui sont chacun munis au moins par endroits d'une enveloppe en matière plastique (410) et qui sont susceptibles d'être fixés les uns aux autres sur des surfaces d'assemblage (302, 304) qui se font face dans une direction périphérique du stator (150), les enveloppes en matière plastique (410) des segments de stator (210, 220, 230, 240, 250, 260, 270, 280, 290) étant reliées les unes aux autres par l'intermédiaire d'au moins un élément de liaison (601, 602, 601a, 601b, 601c, 601d, 601e) de forme annulaire, qui soumet les segments de stator (210, 220, 230, 240, 250, 260, 270, 280, 290) à une force agissant vers l'intérieur en direction radiale dans la direction de l'axe médian de stator (603), pour provoquer une contrainte agissant vers l'intérieur en direction radiale des segments de stator (210, 220, 230, 240, 250, 260, 270, 280, 290), **caractérisé en ce que** les enveloppes en matière plastique (410) des segments de stator (210, 220, 230, 240, 250, 260, 270, 280, 290) et/ou l'au moins un élément de liaison (601, 602, 601a, 601b, 601c, 601d, 601e) comportent en tant que conceptions géométriques (610a, 610b, 610c, 610d, 610e, 810a) des biseaux, des saillies, des évidements et/ou des puits, pour un agrandissement d'une surface de liaison réciproque de l'au moins un élément de liaison (601, 602, 601a, 601b, 601c, 601d, 601e) sur les enveloppes en matière plastique (410) des segments de stator (210, 220, 230, 240, 250, 260, 270, 280, 290), l'arête faisant face à l'élément de liaison (601a) de l'extrémité axiale (610a) des enveloppes en matière plastique (410) étant fusible jusqu'à ce que l'élément de liaison (601a) et l'extrémité axiale (610a) présentent des surfaces de liaison au moins conçues approximativement à la parallèle les unes des autres, sur lesquelles ils sont soudés les uns aux autres par l'intermédiaire de la matière plastique fondue.

2. Moteur électrique selon la revendication 1, **caractérisé en ce que** l'au moins un élément de liaison (601, 602, 601a, 601b, 601c, 601d, 601e) est relié avec les enveloppes en matière plastique (410) des segments de stator (210, 220, 230, 240, 250, 260, 270, 280, 290) par soudage aux ultrasons ou par soudage par rayonnement laser.

3. Moteur électrique selon la revendication 1 ou 2, **caractérisé en ce que** l'au moins un élément de liaison (601, 602, 601a, 601b, 601c, 601d, 601e) comporte de l'acier à ressort, de la céramique, du verre, un élastomère, une matière plastique et/ou un biopolymère.

4. Moteur électrique selon l'une quelconque des revendications précédentes, **caractérisé en ce que** l'au moins un élément de liaison (601, 602, 601a, 601b, 601c, 601d, 601e) est conçu à la manière d'un chapeau de palier (601) susceptible d'être pressé sur les segments de stator (210, 220, 230, 240, 250, 260, 270, 280, 290) placés sous forme annulaire ou à la manière d'une plaque de circuit (602) dans laquelle peuvent être pressés les segments de stator (210, 220, 230, 240, 250, 260, 270, 280, 290) placés sous forme annulaire.

5. Moteur électrique selon la revendication 1, **caractérisé en ce que** les conceptions géométriques (610a, 610b, 610c, 610d, 610e, 810a) sont conçues en étant mutuellement correspondantes.

6. Moteur électrique selon l'une quelconque des revendications précédentes, **caractérisé en ce que** l'au moins un élément de liaison (601, 602, 601a, 601b, 601c, 601d, 601e) comporte une bague élastique (601e) pour un engagement dans un évidement (611e) correspondant des enveloppes en matière plastique (410) des segments de stator (210, 220, 230, 240, 250, 260, 270, 280, 290).

7. Moteur électrique selon la revendication 6, **caractérisé en ce que** la bague élastique (601e) comporte au moins une convexité (605a, 605b, 605c, 605d) agrandissant la périphérie, destinée à renforcer une pression de contact après une liaison avec les segments de stator (210, 220, 230, 240, 250, 260, 270, 280, 290) placés sous forme annulaire.

8. Moteur électrique selon l'une quelconque des revendications précédentes, **caractérisé en ce que** les enveloppes en matière plastique (410) des segments de stator (210, 220, 230, 240, 250, 260, 270, 280, 290) et/ou l'au moins un élément de liaison (601, 602, 601a, 601b, 601c, 601d, 601e) de forme annulaire comportent au moins un capteur de direction énergétique (604), lors du processus de soudage correspondant, une distribution énergétique précise étant atteinte dans la région du capteur de direction énergétique (604) qui permet une création de masse fondue définie et contrôlée dans ladite région.

9. Moteur électrique selon l'une quelconque des revendications précédentes, **caractérisé en ce que** lors d'une fusion de l'au moins un capteur de direction énergétique (604), la surface de liaison entre les enveloppes en matière plastique (410) et l'élément de liaison (601, 602, 601a, 601b, 601c, 601d, 601e) s'agrandissent.

10. Procédé, destiné à fabriquer un moteur électrique (100), qui comporte un rotor (180) et un stator (150), le stator (150) comportant une pluralité de segments de stator (210, 220, 230, 240, 250, 260, 270, 280, 290) placés sous forme annulaire autour d'un axe médian de stator (603) qui sont munis chacun, au moins par endroits d'une enveloppe en matière plastique (410) et qui sont susceptibles d'être fixés les uns aux autres sur des surfaces d'assemblage (302, 304) qui se font face dans une direction périphérique du stator (150), lors duquel les enveloppes en matière plastique (410) des segments de stator (210, 220, 230, 240, 250, 260, 270, 280, 290) sont reliées entre elles par l'intermédiaire d'au moins un élément de liaison (601, 602, 601a, 601b, 601c, 601d, 601e) de forme annulaire, qui soumet les segments de stator (210, 220, 230, 240, 250, 260, 270, 280, 290) à une force agissant vers l'intérieur en direction radiale dans la direction de l'axe médian de stator (603), pour provoquer une contrainte agissant vers l'intérieur en direction radiale des segments de stator (210, 220, 230, 240, 250, 260, 270, 280, 290), **caractérisé en ce que** les enveloppes en matière plastique (410) des segments de stator (210, 220, 230, 240, 250, 260, 270, 280, 290) et/ou l'au moins un élément de liaison (601, 602, 601a, 601b, 601c, 601d, 601e) comportent en tant que conceptions géométriques (610a, 610b, 610c, 610d, 610e, 810a) des biseaux, des saillies, des évidements et/ou des puits, pour un agrandissement d'une surface de liaison réciproque de l'au moins un élément de liaison (601, 602, 601a, 601b, 601c, 601d, 601e) sur les enveloppes en matière plastique (410) des segments de stator (210, 220, 230, 240, 250, 260, 270, 280, 290), lors du soudage de l'élément de liaison (601a) avec une extrémité axiale (610a) des enveloppes en matière plastique (410), l'arête de l'extrémité axiale (610a) qui fait face à l'élément de liaison (601a) se mettant à fondre jusqu'à ce que l'élément de liaison (601a) et l'extrémité axiale (610a) comportent des surfaces de liaison au moins conçues approximativement à la parallèle les unes des autres, sur lesquelles ils sont soudés les uns aux autres par l'intermédiaire de la matière plastique fondue.
